# EUROPEAN PATENT APPLICATION

(11) **EP 2 361 515 A2**
(43) Date of publication of application: **31.08.2011**
(21) Application number: 09814736.6
(22) Date of filing: 12.08.2009
(51) Int. Cl.: A23N 7/02, A23N 5/08, B26D 1/44

(54) **PEELING MACHINE**

(30) Priority: 18.09.2008 KR 20080091788; 06.10.2008 KR 20080097549; 22.01.2009 KR 20090005290
(71) Applicant: Youn, Kiseok, Gyeonggi-do 465-711 (KR)
(72) Inventor: Youn, Kiseok, Gyeonggi-do 465-711 (KR)
(74) Representative: Coulon, Ludivine
(86) International application number: PCT/KR2009/004486
(87) International publication number: WO 2010/032920

(57) **Abstract**

The present invention provides a peeling machine comprising a container having a space in which the outer cover are removed from farm produce, a rotating plate located inside said container and coupled to a blade, a peel exit extending from the bottom of said container to the exterior, a plurality of wing plates that located between the bottom of said container and said rotating plate and placed at equal angles with respect to the center of said rotating plate, and that also rotate when said rotating plate rotates, and motor that supplies power to said rotating plate.

## Description

### Technical Field

The present invention relates to a peeling machine which can easily remove the outer cover of the farm produce.

### Background Art

Farm produce like potato, sweet potato, chestnut and the like are covered with the outer cover. A peeling machine is used for removing the outer cover of the farm produce.

A grinding type peeling machine has been conventionally used. The grinding type peeling machine removes the outer cover of the farm produce by rubbing the outer cover of the farm produce on an abrasive coupled with an inner wall of a container.

However, such a grinding type peeling machine is unsanitary. In addition, when the outer cover inserted between the abrasive and the abrasive must be removed by flushing with water. Accordingly, the said grinding type peeling machine may cause serious water pollution.

### Disclosure of Invention

The present invention provides a blade type peeling machine. In particular, the present invention provides the peeling machine which can perform high-speed revolution since a rotary shaft of a motor thereof is not positioned in a state of eccentricity.

In addition, the present invention provides the peeling machine having an improved wing plate structure for reducing an air resistance.

In addition, the present invention provides the peeling machine which uniformly removes the outer cover of the farm produce by floating and rotating the farm produce at the proper height in the space.

In addition, the present invention provides the peeling machine which prevents the damage of the farm produce from the impact in the peeling process.

In addition, the present invention provides the peeling machine which prevents the damage of the farm produce from a discharging process.

In addition, the present invention provides the peeling machine which revolves the farm produce to a center of a rotating plate so as to use all parts of a blade.

In addition, the present invention provides the peeling machine which smoothly removes the outer cover of the farm produce located at an edge of a container.

In addition, the present invention provides the peeling machine which easily separates the rotating plate from the container.

The present invention provides the peeling machine which can easily remove the outer cover of the farm produce by using the blade coupled with the rotating plate.

In addition, the present invention provides the peeling machine which can easily cut the outer cover of the farm produce to be moved to an edge of the container using the blade by coupling an internal tube with the inside of the container of the peeling machine.

In addition, the present invention provides the peeling machine which always locates the farm produce at an upper part of the blade since the diameter of the rotating plate is larger than an inside diameter of the internal tube.

In addition, the present invention prevents the damage of the farm produce from impact by coupling a shock absorbing member with the inside of the container.

In addition, the present invention reduces a resistance to air by forming the holes onto the wing plate.

In addition, the present invention moves a processing target, farm produce to a center of the rotating plate by coupling an inductive plate with the inner wall of the container.

In addition, the present invention provides the peeling machine which can reduce an air resistance by slanting an upper part of the wing plate to a front side on the basis of the rotating direction of the rotating plate.

In addition, the present invention provides the peeling machine in which the farm produce is not damaged during a discharging process of the farm produce since a lower protrusion of an outlet of a product is lower than an upper surface of the rotating plate.

In addition, the present invention provides the peeling machine which discharges easily the outer cover separated from the farm produce to the outside by locating the wing plate between the rotating plate and a bottom of the container.

In addition, the present invention provides the peeling machine which prevents the eccentricity of the rotary shaft of the motor by arranging a plurality of wing plates in an equal angle around the rotary shaft.

In addition, a protrusive part is coupled with an upper part of the rotating plate. The protrusive part is used for uniformly removing the outer cover of the farm produce by floating and rotating the farm produce at the proper height in the air. In addition, the present invention can easily separate the rotating plate from the base body due to the separating and assembling construction.

### Effects of Invention

The peeling machine of the present invention can easily remove the outer cover of the farm produce using the blade coupled with the rotating plate.

In addition, the peeling machine of the present invention can cut the farm produce even moved to an edge of the container by coupling the internal tune with the inside of the container.

In addition, the peeling machine of the present invention always makes the farm produce be located at the upper part of the blade since the diameter of the rotating plate is larger than the inside diameter of the internal tube.

In addition, the peeling machine of the present invention makes the farm produce be moved to the center of the rotating plate since the inductive plate thereof is coupled with the inner wall of the container.

In addition, the peeling machine of the present invention prevents the damage of the farm produce during the discharging period of the farm produce since the lower protrusion of the outlet of the product is lower than the upper surface of the rotating plate.

In addition, the peeling machine of the present invention easily discharges the outer cover separated from the farm produce to the outside by coupling the wing plate between the rotating plate and the bottom of the container.

In addition, the peeling machine of the present invention prevents the eccentricity of the rotary shaft of the motor by arranging the wing plates in the equal angle around the rotary shaft.

In addition, the peeling machine of the present invention can reduce the air resistance by slanting the upper part of the wing plate to the front side on the basis of the rotating direction of the rotating plate.

In addition, the peeling machine of the present invention can reduce the air resistance by forming the wing holes at the wing plate.

In addition, the protrusive part of the peeling machine of the present invention uniformly removes the outer cover of the farm produce by floating and rotating the farm produce at the proper height in the air.

### Brief Description of the Drawings

FIG. 1 is a separated perspective view of a peeling machine according to a first embodiment of the present invention.

FIG. 2 is a sectional view of a peeling machine according to a first embodiment of the present invention.

FIG. 3 is a cut perspective view of a cutting module according to a first embodiment of the present invention.

FIG. 4 is a rear perspective view of a cutting module according to a first embodiment of the present invention.

FIG. 5 is a sectional view of a peeling machine according to a second embodiment of the present invention.

FIG. 6 is a sectional view of a peeling machine according to a third embodiment of the present invention.

FIG. 7 is a perspective view of an internal tube of a peeling machine according to a third embodiment of the present invention.

FIG. 8 is a perspective view of a peeling machine according to a fourth embodiment of the present invention.

FIG. 9 is a sectional view of a peeling machine according to a fourth embodiment of the present invention.

FIG. 10 is a separated perspective view of a peeling machine according to a fourth embodiment of the present invention.

FIG. 11 is a cut perspective view of a cutting module according to a fourth embodiment of the present invention.

<Reference Signs List.

10: peeling machine, 11: container

120: cutting module, 12: rotating plate

121: blade, 122: protrusive part

13: internal tube, 14 : cover

15: motor

### Best Mode for Carrying out the Invention

Preferred embodiments of invention are hereinafter described in detail, referring the accompanying drawings, in which the embodiments of the invention are illustrated to be understood by those having a skill in the art. The spirit and scope of the present invention is, however, not limited to the illustrated embodiments to be set forth herein.

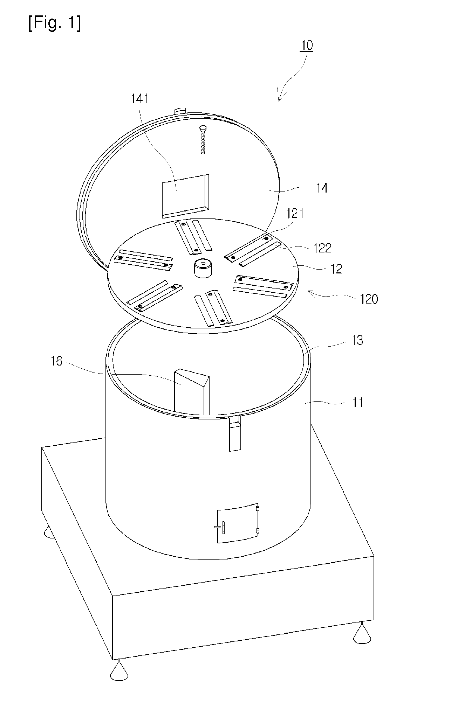

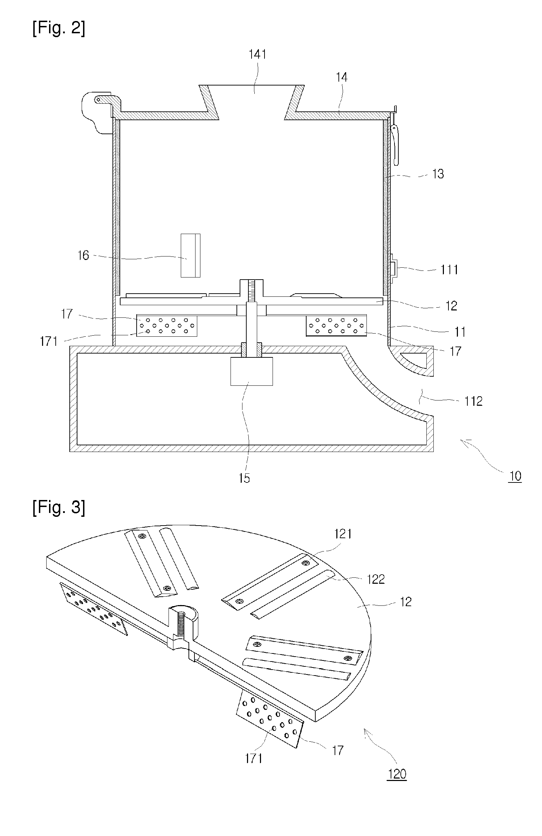

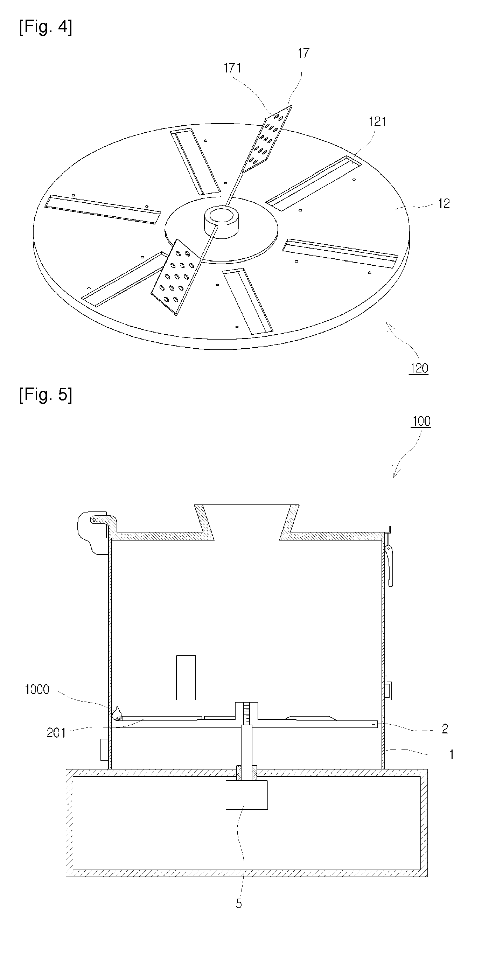

FIG. 1 is a separated perspective view of a peeling machine according to a first embodiment of the present invention. FIG. 2 is a sectional view of a peeling machine according to a first embodiment of the present invention. FIG. 3 is a cut perspective view of a cutting module according to a first embodiment of the present invention. FIG. 4 is a rear perspective view of a cutting module according to a first embodiment of the present invention. Referring to FIGs. 1 to 4, a peeling machine (10) includes a container (11) having a space for storing farm produce, a rotating plate (12) coupled with a blade (121) for removing the outer cover of the farm produce, and a motor (15) for supplying power to the rotating plate (12). A cutting module (120) includes the rotating plate (12) and the blade (121).

The container (11) for storing the farm produce can be made of various materials such as stainless steel or plastic and the like. The container (11) has conventionally a vertically cylindrical shape, but can be selected from another shape if the said shape thereof affects the function thereof. The farm produce is covered with the outer cover, and such a produce is illustrated as potato, sweet potato, carrot, orange, kiwi, etc.

The rotating plate (12) is located in the inside of the container (11). The rotating plate is conventionally formed with a metallic material. The rotating plate (12) may be produced by the plastic material so long as the durability thereof is secured.

An internal tube (13) is protruded from and is coupled with the inside of the container (11). In a peeling process, the farm produce is moved to an edge of the rotating plate (12) by centrifugal force. The farm produce moved to the edge of the rotating plate (12) is shifted to an internal direction of the container (11) as much as the thickness of the internal tube (13).

The thickness of the internal tube (13) is finely adjusted in order to prevent the contact with the rotating plate (12).

The internal tube (13) and the container (11) can be integrated into one body using the same material. The inside diameter of the internal tube (13) is smaller than that of the container (11). The internal tube (13) and the container (11) are discriminated according to a spatially arranged shape. The container (11) and the internal tube (13) can be formed by dividing one metal pipe into the different inside diameters.

In addition, an inductive plate (16) is coupled with an inner wall of the container (11). The farm produce is moved to the edge of the rotating plate (12) by the centrifugal force. The farm produce is temporarily moved to the center of the rotating plate (12) through the inductive plate (16). An entire area of the blade (121) can be used by the inductive plate (16).

A peel exit (112) is formed in the bottom of the container (11) to the outside. The peel exit (112) is a path through which a separated peel is discharged to the outside.

A motor (15) provides power for rotating the rotating plate (12). A rotary shaft of the motor (15) is coupled with a center of the rotating plate (12). The rotating plate (12) may be rotated at a high speed such as 1000 r.p.m...

The farm produce such as potato is thrown into an inlet (141) formed at a cover (14). The thrown farm produce is located at an upper surface of the rotating plate (12), which is located in the inside of the container (11). The rotating plate (12) is rotated at a high speed. The farm produce is cut by the blade (121) coupled with an upper part of the rotating plate (12). The separated peel is dropped to the bottom of the container (11) through a through-hole formed at the rotating plate (12). At this time, the separated outer cover are moved to the peel exit (112) by a wing plate (17) located between the bottom of the container (11) and the rotating plate (12).

The wing plate (17) may be coupled with a lower part of the rotating plate (12). In addition, the wing plate (17) may be coupled with the rotary shaft of the motor (15).

It is desirable to form the wing plate (17) with a metal plate. The wing plate (17) is not easily bent at high rotation when being formed with the metal plate. The wing plate (17) may cause noise due to air friction, if it is bent.

As shown in FIG. 3, the wing plate (17) may be formed with a plurality of wing plates. It is preferred that the wing plate (17) is arranged in an equal angle around the center of the rotating plate (12) so as to prevent the eccentricity of the rotary shaft of the motor (15). As shown in FIG. 4, when the wing plates (17) have two, the plates are arranged, at 180 degrees around the center of the rotating plate (12). When the wing plates (17) have three, the wing plates are arranged at 120 degrees around the center of the rotating plate (12). Meanwhile, the angle of the wing plate does not mean an exact mathematical equal angle. In view of a person having a skill in the art, the angle of the wing plate means that the wing plate (17) is arranged nearly to an equal angle to prevent the eccentricity. Accordingly, the structure of two wing plates (17) arranged at 160 - 180 degrees also belongs to the scope of the prevent invention.

The rotary shaft of the motor (15) cannot be rotated at high speed under the eccentric state. Particularly, the peeling machine (10) of the present invention removes the outer cover of the farm produce by the cutting operation of the blade (121). Accordingly, it would be better to rotate the rotating plate (12) at high speed. The rotating plate (12) may be rotated about 1000 r.p.m. A conventional peeling machine of a grinding type has not been considered an eccentric state of the rotary shaft of the motor since it is not rotated at high speed.

Meanwhile, the wing holes (171) are formed at the wing plate (17), of which holes reduce air resistance. It is necessary to reduce the air resistance, in order to rotate the rotating plate (12) at a high speed. The more the air resistance increases, the more the motor (15) consumes electric energy. Referring to FIG. 3, the wing holes (171) shows at the wing plate (17).

An upper part of the wing plate (17) is slanted to a front side thereof to the rotating direction of the rotating plate (12). The air resistance is reduced by the slanted wing plate (17). The wing plate (17) has a slanted surface to reduce the air resistance thereof.

Referring to FIG. 4, the wing plates (17) are arranged at the equal angle around the center of the rotating plate (12). The arrangement of the wing plates increases the lifetime of the motor (15) by preventing the eccentricity of the rotary shaft of the motor (15).

As shown in FIG. 4, in an embodiment of the present invention, the wing plates (17) are coupled with a lower part of the rotating plate (12). However, the wing plates (17) may be coupled with the rotary shaft of the motor (15).

In addition, in FIG. 4, the upper parts of the wing plates (17) are slanted to a front side thereof on the basis of the rotating direction of the rotating plate (17). The wing plates may be slanted in various directions in order to achieve an object for reducing the air resistance. Meanwhile, the air resistance of the wing plates can be reduced by the wing hole (171).

The farm produce from which the outer cover is removed is discharged to the outside through a product outlet (111). The product outlet (111) is formed at the bottom of the container (11) to the outside.

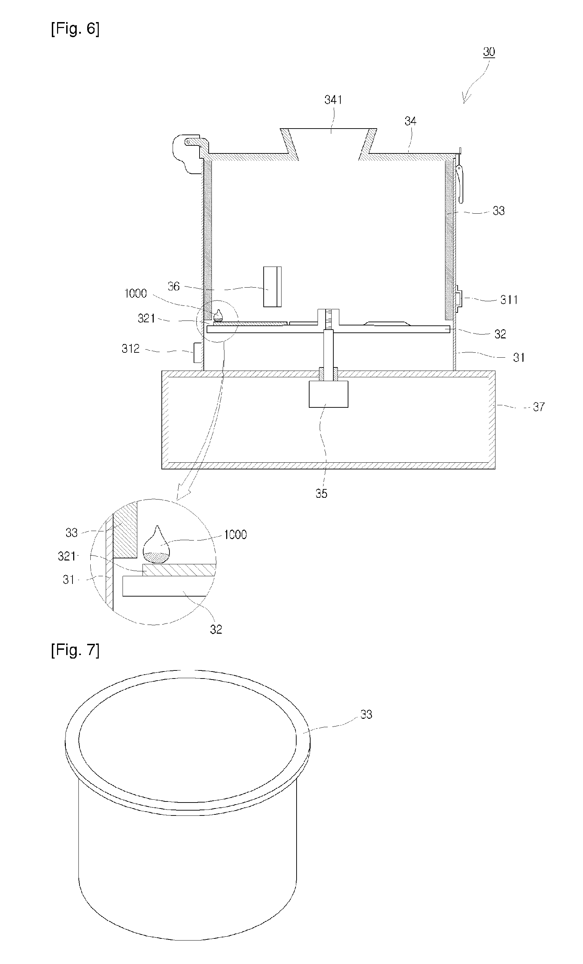

FIG. 5 is a sectional view of the peeling machine according to a second embodiment of the present invention. A rotating plate (2) is coupled with an inside of a container (1) of the peeling machine (100). A farm produce (1000) is moved along an edge of the rotating plate (2) by the centrifugal force according to the rotation of the rotating plate (2). There is some space between the rotating plate (2) and an inner wall of the container (1). As shown in FIG. 5, the farm produce (1000) cannot be cut by blade (201) if the farm produce (1000) is located in the space. Particularly, the farm produce like a chestnut is not cut. This problem is solved through a third embodiment as shown in FIG. 6.

FIG. 6 is a sectional view of the peeling machine according to the third embodiment of the present invention. The peeling machine (30) according to the third embodiment of the present invention includes a container (31), a rotating plate (32) coupled with a blade (321), a motor (35) for providing power to the rotating plate (32) and the like.

An internal tube (33) is protruded from and is coupled with an inner wall of the container (31). The rotating plate (32) is coupled with the inside of the container (31). The rotating plate (12) is located between the internal tube (33) and a bottom of the container (31). A diameter of the rotating plate (12) is larger than an inside diameter of the internal tube (33). The diameter of the rotating plate (12) is smaller than an inside diameter of the container (31).

The internal tube (33) is protruded in the predetermined thickness from the inside of the container (31). The farm produce (1000) is moved to the center of the internal tube (33) as much as the thickness thereof. As a result, the farm produce (1000) is located at an upper surface of the blade (321) and is cut easily.

The internal tube (33) may be formed with the same material as the container (31). Namely, the container (31) and the internal tube (33) may be simultaneously formed by cutting one metal pipe. Compared with the container (31), the internal tube (33) is relatively located at the inside of the container (31). The internal tube (33) may be prepared by either the soft material or the hard material. The internal tube (33) may be prepared by silicon material, or stainless steel. The rotating plate (12) is located between the internal tube (33) and the bottom of the container (31).

As shown in FIG. 6, in the peeling machine (30) according to an embodiment of the present invention, the diameter of the rotating plate (32) is larger than the inside diameter of the internal tube (33), and smaller than the inside diameter of the container (31). In such a construction, the farm produce (1000) is moved to the center of the container (31) and is located at an upper surface of the rotating plate (31). Accordingly, when the small farm produce like the chestnut is thrown into the container (31), such a farm produce is thoroughly cut by the blade (321).

The outer covers being cut are discharged through a peel exit (312) to the outside. The peel exit is formed in the bottom of the container (31) to the outside direction. The farm produce (100) is discharged through a product outlet (311) to the outside.

When the diameter of the rotating plate (32) is, as shown in the present embodiment, larger than the diameter of the internal tube (33), the rotating plate (32) cannot be separated from the container (31). The rotating plate (32) should be easily separated in order to be cleaned. Accordingly, the base part (37) coupled with a lower part of the container (31) is desirably coupled with the container (31) in a detachable structure. As method for adapting the detachable structure, it may be selected one using a bolt and a nut.

In addition, as shown in FIG. 7, the internal tube (33) is formed with the detachable structure with respect to the container (31).

A cover (34) may be detachably coupled with an upper part of the container (31). An inlet (341) is formed at the cover (34), of which inlet (341) may be used as a path for the farm produce being thrown into the inside of the container (31).

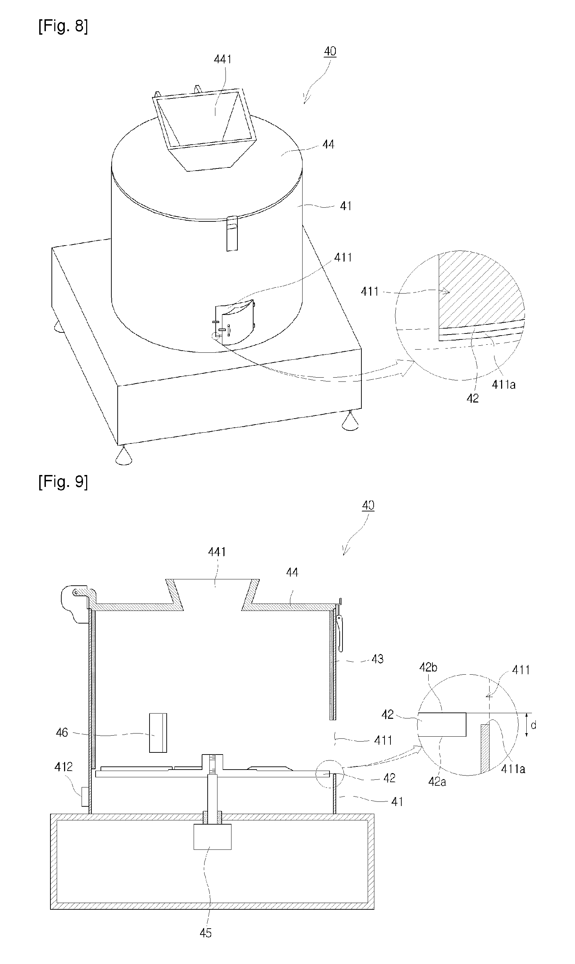

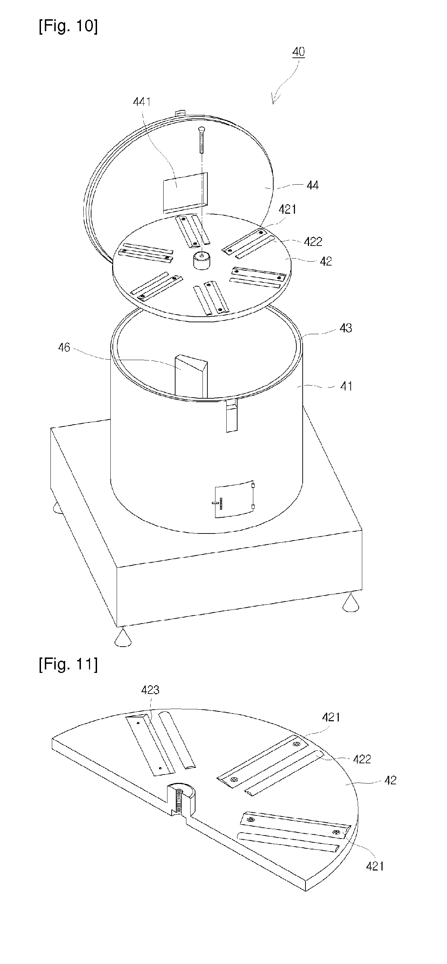

FIG. 8 is a perspective view of the peeling machine according to a fourth embodiment of the present invention. FIG. 9 is a sectional view of the peeling machine according to the fourth embodiment of the present invention. FIG. 10 is a separated perspective view of the peeling machine according to the fourth embodiment of the present invention. FIG. 11 is a cut perspective view of a cutting module according to the fourth embodiment of the present invention. Referring to FIGs. 8 to 11, the peeling machine (40) includes a container (41) for storing farm produce, a rotating plate (42) coupled with a blade (421) for removing the outer cover of the farm produce, a motor (45) for providing power to the rotating plate (42) and the like.

The container (41) for storing the farm produce may be formed with various materials such as stainless steel or plastic and the like. The container (41) has conventionally a cylindrical shape, but it may be formed with other shape if a shape thereof does not affect to a function thereof. As the farm produce, a bulbous plant such as potato, sweet potato, etc., a root plant such as carrot, or a nut plant such as chestnut is illustrated.

The rotating plate (42) is located in the inside of the container (41). The rotating plate (42) may be conventionally formed with the metallic material.

A plurality of blades (421) is coupled on the basis of a center of the rotating plate (42). The rotating plate (42) is operated by rotational power received from the motor (45). The rotational speed of the rotating plate (42) is such high as about 1000 r.p.m. The farm produce strongly collides each other and with the inner wall of the container (41) by the centrifugal force of the rotating plate (42) and the impact of the protruded blade (421).

When the potato, the sweet potato, the chestnut, etc. collides with the inner wall of the container (41), the tissues thereof are damaged. Particularly, when potato tissues are damaged, potato juice is run from the potato. Such potato juice becomes oxidized and a color thereof is discolored into black. In order to solve the problem, in the embodiment of the present invention, a shock absorbing member (43) may be lined with an inner wall of the container (41). The shock absorbing member (43) absorbs the shock by elastic force though the farm produce collides with the inner wall. As a result, the tissues of the farm produce may be protected from damage, and maintain quality thereof.

The shock absorbing member (43) is formed by making a lining with a synthetic resin on the inner wall of the container (41). As a synthetic resin, urethane or silicon is illustrated, and there is no limit in such a material, if the said resin has an elastic property. The synthetic resin has an effect that performs easily a work and prevents the corrosion of the inner wall of the container (41).

The shock absorbing member (43) can be formed with anything that reduces the damage of the farm produce which collides with the inner wall of the container.

The peeling machine according to the embodiments of the present invention removes the outer cover of the farm produce by using the blade (421) under the high speed. At this time, the removed outer cover, as shown in FIG. 11, are discharged through a through-hole (423) formed at a lower end of the blade (421) to a lower part of the rotating plate (42). The outer cover removed by the centrifugal force of the rotating plate (42) collides with the inner wall of the container (41).

In addition, a product outlet (411) being closed is opened after the outer cover is thoroughly removed from the farm produce. At this time, the farm produce located in the inside of the container (41) is discharged through the product outlet (411) to the outside by the centrifugal force. It is desirable that a height (H3) of a lower end protrusion (411a) of the product outlet (411) is lower than a height of an upper surface (42b) of the rotating plate in order to prevent the damage of the product due to the lower end protrusion (411a) of the product outlet (411).

Alternatively, as shown in FIG. 9, the height (H3) of the lower end protrusion (41 a) may be positioned (d) between a height of a lower surface (42a) of the rotating plate and a height of an upper surface (42b) of the rotating plate. Namely, the height of the lower end protrusion (411a) may be higher than the height of the lower surface (42a) of the rotating plate. In this case, the removed outer cover is not discharged through the product outlet (411) to the outside.

The farm produce discharged to the outside collides with the lower end protrusion (411a) and is damaged thereby if the lower end protrusion (411a) is higher than the upper surface (42b) of the rotating plate.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### Example

One aspect of the present invention provides a peeling machine comprising: a container having a space in which the outer cover of farm produce is removed; a rotating plate which is located in an inside of the container and is coupled with a blade; a peel exit formed from a bottom of the container to the outside; a plurality of wing plates which are located between the bottom of the container and the rotating plate and is arranged in an equal angle on the basis of a center of the rotating plate; and a motor for providing power to the rotating plate.

In addition, a protrusive part is formed at the said rotating plate so that the farm produce bounds thereby.

In addition, a shock absorbing member is coupled with the inside of the container so as to prevent the damage of the farm produce due to collision with an inner wall of the container when the farm produce is processed.

In addition, an outlet is formed at the container. A height of a lower end protrusion of the said product outlet is lower than a height of an upper surface of the rotating plate so as to prevent the damage of the farm produce when the farm produce is discharged.

In addition, a wing plate is made of a metal plate so as to prevent a bending affect thereof when being rotated at high speed.

In addition, the peeling machine is characterized in that wing holes are formed at the wing plate in order to reduce the friction against the air when the wing plate is rotated.

In addition, an inductive plate is coupled with the inside of the container so that the farm produce is moved to a center of the rotating plate.

In addition, an upper part of the wing plate is slanted to a front side thereof on the basis a rotating direction of the rotating plate so as to reduce the friction to the air.

Another aspect of the present invention provides a peeling machine comprising: a container having a space for removing the outer cover of farm produce; an internal tube coupled with an inner wall of the container; a rotating plate located in the inside of the container; a blade coupled with the rotating plate so as to remove the outer cover of the farm produce when the rotating plate is rotated; and a motor for providing power to the rotating plate.

In addition, the rotating plate is located between a bottom of the container and the internal tube. A diameter of the rotating plate is smaller that an inside diameter of the container and is larger than an inside diameter of the internal tube.

In addition, a protrusive part is formed at the rotating plate so that farm produce bounds thereby.

In addition, a detachable base part is formed at a lower part of the container. The rotating plate can be easily separated when the base part is detachable.

In addition, the internal tube is detachable with the container so that the rotating plate can be easily separated.

### Industrial Applicability

The peeling machine of the present invention can be used in a school, a troop, a restaurant and the like. In addition, the peeling machine of the present invention can be used in a food factory for manufacturing potato chips.

## Claims

1. A peeling machine comprising:
a container having a space in which the outer cover of farm produce is removed;
a rotating plate which is located in an inside of the container and is coupled with a blade;
a peel exit formed from a bottom of the container to the outside;
a plurality of wing plates which is located between the bottom of the container,
the rotating plate and are arranged in an equal angle on the basis of a center of the rotating plate; and
a motor for providing power to the rotating plate.

2. The peeling machine according to claim 1, wherein a protrusive part is formed at the rotating plate.

3. The peeling machine according to claim 2, wherein a shock absorbing member is coupled with the inside of the container.

4. The peeling machine according to claim 3, wherein an outlet is formed at the container and a height of a lower end protrusion of the product outlet is lower than a height of an upper surface of the rotating plate.

5. The peeling machine according to claim 3, wherein the height of the lower end protrusion of the product outlet is larger than a height of a lower surface of the rotating plate.

6. The peeling machine according to claim 3, wherein an inductive plate is coupled with the inside of the container.

7. The peeling machine according to claim 1, wherein wing holes are formed at the wing plates.

8. The peeling machine according to claim 1, wherein an upper part of the wing plate is slanted to a front side thereof on the basis a rotating direction of the rotating plate.

9. A peeling machine comprising:
a container having a space for removing the outer cover of farm produce;
an internal tube coupled with an inner wall of the container;
a rotating plate located in the inside of the container;
a blade coupled with the rotating plate so as to remove the outer cover of the farm produce when the rotating plate is rotated; and
a motor for providing power to the rotating plate.

10. The peeling machine according to claim 9, wherein the rotating plate is located between the bottom of the container and the internal tube, a diameter of the rotating plate is smaller than an inside diameter of the container and is larger than an inside diameter of the internal tube.

11. The peeling machine according to claim 10, wherein a protrusive part is coupled with the rotating plate.

12. The peeling machine according to claim 11 further comprising a base part which is detachably formed at a lower part of the container.

13. The peeling machine according to claim 11, wherein the internal tube is detachable with the container.
